# DEMANDE DE BREVET EUROPEEN

(11) **EP 1 724 124 A1**
(43) Date de publication de la demande: **22.11.2006**
(21) Numéro de dépôt: 06300464.2
(22) Date de dépôt: 12.05.2006
(51) Int. Cl.: B60B 7/06

(54) **Bague de fixation d'un enjoliveur sur une roue et procede de montage associe**

(30) Priorité: 20.05.2005 FR 0505088
(71) Demandeur: PEUGEOT CITROËN AUTOMOBILES S.A., 78140 Velizy Villacoublay (FR)
(72) Inventeur: Lamoulie, Didier, 92370, Chaville (FR)

(57) **Abrégé**

Une bague de fixation d'un enjoliveur (3) sur un voile (2) de roue présentant une ouverture centrale délimitée par une bordure (20) comprend une première nervure (41) circulaire permettant la fixation de la bague (4) sur le voile (2), et une seconde nervure (42) circulaire permettant la fixation de la bague (4) sur l'enjoliveur (3).

Une roue de véhicule comprenant une jante (1), un voile (2) fixé à l'intérieur de la jante (1), et un enjoliveur (3) fixé sur le voile (2) par l'intermédiaire de la bague de fixation selon l'invention, l'enjoliveur (3) comprenant une pluralité de pattes (31) de fixation fixées sur une surface interne de l'enjoliveur (3).

L'invention permet de monter et démonter un enjoliveur d'un voile de roue de façon simple.

## Description

La présente invention concerne une bague de fixation d'un enjoliveur sur une roue de véhicule et un procédé de montage d'un enjoliveur sur une roue au moyen d'une telle bague.

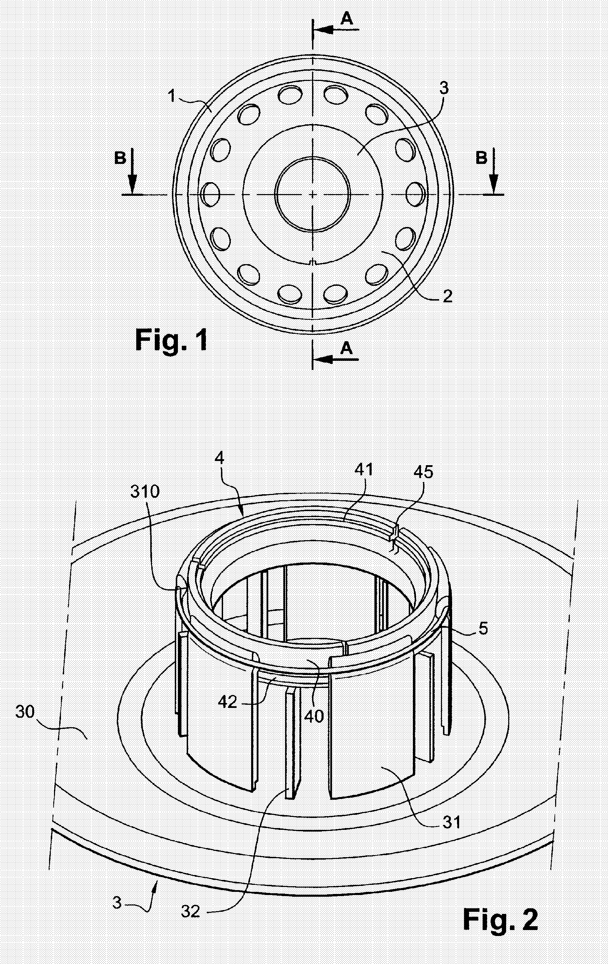

La figure 1 illustre une roue de véhicule sans pneumatique, par exemple du type véhicule automobile. La roue d'un véhicule est constituée d'une jante 1, sur laquelle est monté un pneumatique. Un voile 2 est fixé à l'intérieur de la jante 1, du côté extérieur du véhicule, généralement par soudage ou rivetage. Chaque roue est fixée à l'essieu d'un véhicule par des vis de fixation et des boulons, ces vis traversant à la fois le voile 2 et une plaque fixée à l'extrémité d'un essieu. Le voile 2 comporte en son centre une ouverture permettant le passage de l'extrémité de l'essieu du véhicule. Un enjoliveur 3 est généralement fixé sur le voile 2 de façon à empêcher l'accès aux vis de fixation de la roue sur l'essieu et la pénétration de saleté à l'intérieur de la roue.

Il est connu dans l'art antérieur, par exemple sur le véhicule de la marque Berlingo de la société Citroën ou le véhicule de la marque Partner de la société Peugeot, d'utiliser les têtes des vis de fixation des voiles sur l'essieu comme moyen de fixation d'un enjoliveur sur une roue.

Il est également connu dans l'art antérieur par le document EP-B-0 106 142 un voile sur lequel est maintenu en place une plaque de recouvrement à l'aide d'un dispositif de verrouillage. Le dispositif de verrouillage comprend un élément de maintien constitué d'une plaque en matériau élastique, pourvue d'appendices élastiques. L'élément de maintien est monté par l'arrière de la roue dans l'ouverture centrale du voile, les appendices élastiques s'accrochant sur les bords intérieurs de l'ouverture centrale du voile et exerçant une pression contre ces bords de façon à maintenir l'élément de maintien dans le voile. Le dispositif de verrouillage comprend également un verrou disposé au centre de la plaque de recouvrement, ledit verrou s'engageant dans une ouverture centrale de l'élément de maintien de façon à maintenir la plaque de recouvrement sur l'élément de maintien lorsque le verrou est fermé. Un inconvénient de ce dispositif de verrouillage est qu'il est relativement complexe, puisqu'il est constitué de deux éléments coopérant l'un avec l'autre, chacun se fixant respectivement sur le voile et sur la plaque de recouvrement. Un autre inconvénient de ce dispositif de verrouillage est qu'il ne permet pas la fixation d'un enjoliveur pourvu de pattes de fixation.

Le but de l'invention est donc de proposer une bague de fixation d'un enjoliveur sur un voile de roue qui soit simple de conception, qui permette de monter et de démonter facilement un enjoliveur d'un voile de roue et qui permette la fixation d'un enjoliveur pourvu de pattes de fixations.

Ce but est atteint par une bague de fixation d'un enjoliveur sur un voile de roue présentant une ouverture centrale délimitée par une bordure, comprenant :
- une première nervure circulaire permettant la fixation de la bague sur le voile,
- une seconde nervure circulaire permettant la fixation de la bague sur l'enjoliveur.

Selon une autre particularité, les première et seconde nervures sont situées sur la surface intérieure de la bague.

Selon une autre particularité, les première et seconde nervures sont situées sur la surface extérieure de la bague.

Selon une autre particularité, la première nervure et la seconde nervure sont respectivement situées sur deux surfaces opposées de la bague.

Selon une autre particularité, la première nervure est adaptée pour coopérer avec une rainure située sur la bordure de l'ouverture centrale du voile.

Selon une autre particularité, la bague de fixation comprend un épaulement circulaire destiné à prendre appui sur l'extrémité de la bordure de l'ouverture centrale du voile.

Selon une autre particularité, la seconde nervure est adaptée pour coopérer avec une pluralité de pattes de fixation de l'enjoliveur.

Selon une autre particularité, la bague de fixation comprend une pluralité de rainures longitudinales de longueur inférieure à la longueur de la bague.

Un deuxième but de l'invention est de proposer un procédé de montage d'un enjoliveur sur une roue au moyen de la bague de fixation selon l'invention.

Ce but est atteint par un procédé de montage d'un enjoliveur, comprenant une pluralité de pattes de fixation et d'une pluralité de supports intercalés entre les pattes de fixation, sur un voile d'une roue de véhicule au moyen d'une bague de fixation selon l'invention, le procédé comprenant les étapes suivantes :
- fixation de la bague sur l'enjoliveur ;
- fixation de l'ensemble enjoliveur avec bague sur le voile.

Selon une autre particularité, l'étape de fixation de la bague sur l'enjoliveur comprend les étapes suivantes :
- positionnement de la bague en vis-à-vis des pattes de fixation de l'enjoliveur ;
- insertion de la bague entre les pattes de fixation ou autour des pattes de fixation jusqu'à ce qu'un bord de la bague vienne en butée contre les supports et que la seconde nervure de la bague soit encliquetée derrière un épaulement de chaque patte de fixation de l'enjoliveur.

Selon une autre particularité, l'étape de fixation de l'ensemble enjoliveur avec bague sur le voile comprend les étapes suivantes :
- positionnement de l'enjoliveur muni de la bague en vis-à-vis de l'ouverture centrale du voile de la roue ;
- insertion de la bague dans ou autour de la bordure de l'ouverture centrale du voile par enfoncement de l'ensemble enjoliveur avec bague jusqu'à ce qu'un épaulement de la bague vienne en butée contre la surface d'extrémité de la bordure de l'ouverture centrale du voile et que la première nervure soit encliquetée dans une rainure de la bordure de l'ouverture centrale du voile.

Selon une autre particularité, l'étape de fixation de la bague sur l'enjoliveur est suivie, avant l'étape de fixation de l'ensemble enjoliveur avec bague sur le voile, d'une étape de fixation d'un anneau de maintien à l'intérieur d'une rainure située sur chaque patte de fixation de l'enjoliveur.

Un troisième but de l'invention est de proposer un procédé de remontage d'un enjoliveur sur une roue au moyen de la bague de fixation selon l'invention.

Ce but est atteint par un procédé de remontage d'un enjoliveur, comprenant une pluralité de pattes de fixation et d'une pluralité de supports intercalés entre les pattes de fixation, sur un voile d'une roue de véhicule au moyen d'une bague de fixation selon l'invention, le procédé comprenant les étapes suivantes :
- positionnement de l'enjoliveur en vis-à-vis de l'ouverture centrale du voile de la roue muni de la bague ;
- fixation de l'enjoliveur sur la bague fixée dans l'ouverture centrale du voile.

Selon une autre particularité, l'étape de fixation de l'enjoliveur sur la bague consiste à insérer la bague entre les pattes de fixation ou autour des pattes de fixation de l'enjoliveur jusqu'à ce qu'un bord de la bague vienne en butée contre les supports et que la seconde nervure de la bague soit encliquetée derrière un épaulement de chaque patte de fixation de l'enjoliveur.

Un quatrième but de l'invention est de proposer une roue.

Ce but est atteint par une roue de véhicule comprenant:
- une jante,
- un voile fixé à l'intérieur de la jante,
- un enjoliveur fixé sur le voile par l'intermédiaire d'une bague de fixation selon l'invention par un procédé de montage ou de remontage selon l'invention, l'enjoliveur comprenant une pluralité de pattes de fixation fixées sur une surface interne de l'enjoliveur.

Selon une autre particularité, les pattes de fixation comprennent chacune un épaulement destiné à coopérer avec une nervure de la bague.

Selon une autre particularité, l'enjoliveur comprend en outre une pluralité de supports fixés sur la surface interne de l'enjoliveur, chacun étant situé entre deux pattes de fixation et la bague de fixation étant destinée à prendre appui sur lesdits supports.

Selon une autre particularité, la distance entre la surface interne de l'enjoliveur et l'extrémité libre de chaque support est inférieure à la distance entre la surface interne de l'enjoliveur et l'extrémité libre de chaque patte de fixation.

Selon une autre particularité, la roue comprend en outre un anneau de maintien situé à l'intérieur d'une rainure située sur chaque patte de fixation de l'enjoliveur.

D'autres caractéristiques et avantages de l'invention apparaîtront à la lecture de la description détaillée qui suit des modes de réalisation de l'invention donnés à titre d'exemple uniquement et en référence aux dessins qui montrent :
- figure 1, une vue de face d'une roue sans pneumatique, déjà décrite ;
- figure 2, une vue en perspective par l'arrière d'un enjoliveur, sur lequel est monté la bague de fixation selon un premier mode de réalisation de l'invention ;
- figure 3, une vue en coupe selon le plan A-A de la figure 1, d'une roue avec la bague de fixation selon le mode de réalisation de la figure 2 ;
- figure 4, une vue en coupe selon le plan B-B de la figure 1, d'une roue avec la bague de fixation selon le mode de réalisation de la figure 2 ;
- figure 5, une vue en perspective par l'arrière d'un enjoliveur, sur lequel est monté la bague de fixation selon un second mode de réalisation de l'invention ;
- figure 6, une vue en coupe selon le plan A-A de la figure 1, d'une roue avec la bague de fixation selon le mode de réalisation de la figure 5 ;
- figure 7, une vue en coupe selon le plan B-B de la figure 1, d'une roue avec la bague de fixation selon le mode de réalisation de la figure 5.

La bague de fixation permet de fixer un enjoliveur sur un voile de roue présentant une ouverture centrale délimitée par une bordure. Cette fixation est réalisée par une première nervure circulaire permettant la fixation de la bague sur le voile et une seconde nervure circulaire permettant la fixation de la bague sur l'enjoliveur. La bague permet de monter et de démonter facilement l'enjoliveur de la roue.

On entend par bague une paroi formée de deux surfaces concentriques sensiblement cylindriques et reliées entre elles par deux bords.

On entend par nervure une partie en saillie par rapport à une paroi, sur une certaine longueur.

On entend par rainure une partie en creux par rapport à une paroi, sur une certaine longueur.

L'enjoliveur comprend une plaque comprenant une surface interne et une surface externe, dite face de style. Lorsque l'enjoliveur est fixé sur la roue, la surface externe est orientée vers l'extérieur de la roue et la surface interne vers l'intérieur de la roue. Une pluralité de pattes de fixation, ainsi qu'une pluralité de supports, sont formées sur la surface interne de l'enjoliveur, chaque support étant situé entre deux pattes de fixation.

Le voile de la roue comprend une ouverture centrale délimitée par une bordure comprenant deux surfaces concentriques reliées entre elles par une surface d'extrémité. L'une des surfaces de la bordure, dite surface intérieure, est orientée vers l'intérieur de l'ouverture centrale. L'autre surface de la bordure est dite surface extérieure.

Le principe de l'invention est de fixer, lors d'un premier montage, la bague sur l'enjoliveur puis l'ensemble enjoliveur avec bague sur le voile de la roue ; lors de montages ultérieurs, l'enjoliveur est fixé sur la bague restée fixée au voile de la roue.

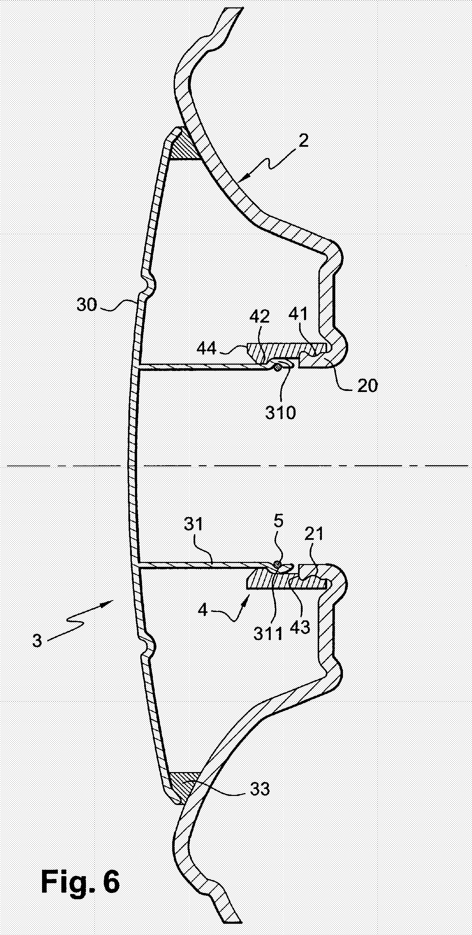

La bague selon l'invention va à présent être décrite en référence aux figures 2 à 7.

La bague 4 de fixation comprend deux nervures 41, 42 circulaires qui sont formées sur la paroi 40 de la bague. Une des nervures, dite première nervure 41, permet la fixation de la bague 4 sur la voile 2 de la roue. L'autre nervure, dite seconde nervure 42, permet la fixation de la bague 4 sur l'enjoliveur 3.

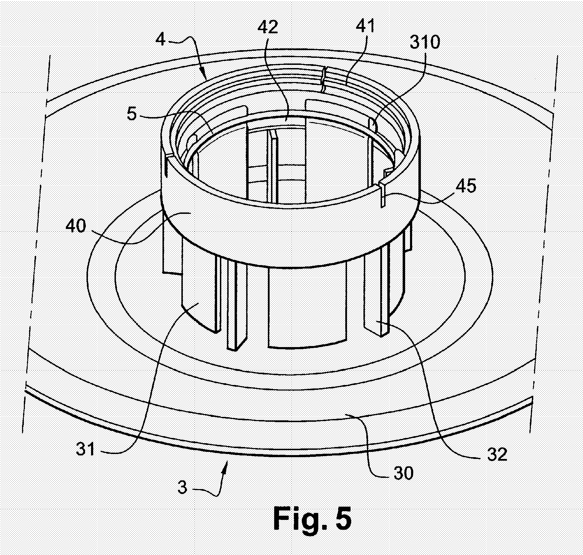

Dans un premier mode de réalisation, représenté en particulier sur les figures 5, 6 et 7, les première et seconde nervures 41, 42 sont situées sur la surface intérieure de la bague 4. Ainsi, les pattes 31 de fixation de l'enjoliveur 3 et la bordure 20 du voile 2 se fixent sur l'intérieur de la bague 4.

Dans un deuxième mode de réalisation, non représenté, les première et seconde nervures 41, 42 sont situées sur la surface extérieure de la bague 4. Ainsi, les pattes 31 de fixation de l'enjoliveur 3 et la bordure 20 du voile 2 se fixent sur l'extérieur de la bague 4.

Dans un troisième mode de réalisation, les première et seconde nervures 41, 42 sont respectivement situées sur deux surfaces opposées de la bague 4. Ainsi, les pattes 31 de fixation de l'enjoliveur 3 et la bordure 20 du voile 2 se fixent sur deux surfaces opposées de la bague 4. Dans un mode de réalisation représenté en particulier sur les figures 2, 3 et 4, les pattes 31 de fixation de l'enjoliveur 3 se fixent sur l'extérieur de la bague 4 tandis que la bordure 20 du voile 2 se fixe sur l'intérieur de la bague 4. Dans un autre mode de réalisation non représenté, les pattes 31 de fixation de l'enjoliveur 3 se fixent sur l'intérieur de la bague 4 tandis que la bordure 20 du voile 2 se fixe sur l'extérieur de la bague 4.

La première nervure 41 est destinée à coopérer avec une rainure 21 située sur la bordure 20 de l'ouverture centrale du voile 2. En particulier, la première nervure 41 est insérée dans la rainure 21, ce qui permet la fixation de la bague 4 sur le voile 2 de la roue. La rainure 21 est par exemple usinée sur la bordure 20 d'un voile 2, sur sa surface intérieure ou sur sa surface extérieure en fonction des modes de réalisation décrits ci-dessus.

La bague comprend également un épaulement 43 circulaire destiné à prendre appui sur la surface d'extrémité de la bordure 20 de l'ouverture centrale du voile 2. C'est le cas en particulier lorsque la première nervure 41 de la bague 4 est insérée dans la rainure 21 du voile 2. L'épaulement 43 est donc formé sur la même surface de la paroi 40 de la bague 4 que la première nervure 41 et la première nervure 41 est située entre cet épaulement 43 et le bord de la bague 4 le plus proche de la première nervure 41.

La seconde nervure 42 de la bague 4 est destinée à coopérer avec les pattes 31 de fixation de l'enjoliveur 3.

Le bord 44 de la bague 4 le plus proche de la seconde nervure 42 est destiné à prendre appui sur les supports 32 de l'enjoliveur 3 lorsque la seconde nervure 42 de la bague 4 est insérée derrière un épaulement 310 de chaque patte 31 de fixation de l'enjoliveur 3.

La bague 4 comprend, en outre, une pluralité de rainures 45 longitudinales de longueur inférieure à la longueur de la bague 4 et formées à partir du bord de la bague 4 le plus proche de la première nervure 41. Ces rainures permettent une certaine élasticité de la bague 4, en particulier du côté de la fixation avec le voile 2.

Un avantage de la bague 4 selon l'invention est qu'elle permet à l'enjoliveur 3 de rester en place sur le voile 2 de la roue quelles que soient les conditions de roulage, en particulier sur route pavée ou nids de poule, en virage ou à proximité d'un trottoir.

La roue munie de la bague 4 selon l'invention va maintenant être décrite en référence aux figures 1 à 7.

La roue comprend une jante 1, un voile 2 fixé à l'intérieur de la jante 1 et un enjoliveur 3 fixé sur le voile par l'intermédiaire de la bague 4 de fixation.

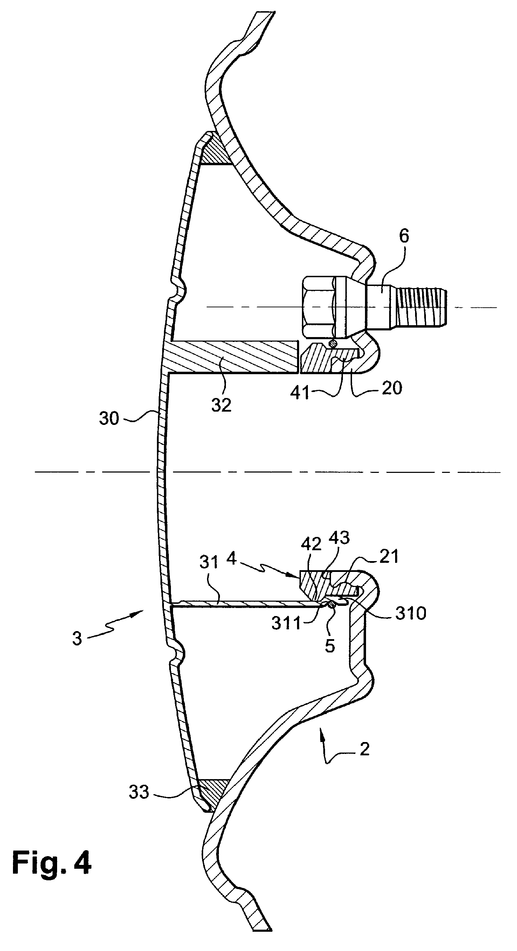

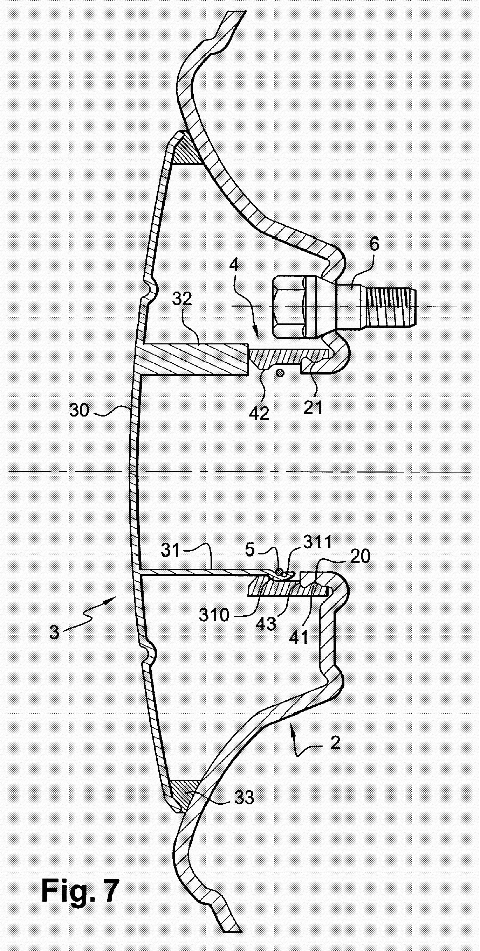

La roue est fixée à l'essieu du véhicule par des vis 6 (figures 4 et 7) traversant à la fois le voile 2 à proximité de l'ouverture centrale et un organe, non représenté, fixé à l'essieu.

L'enjoliveur 3 comprend une pluralité de pattes 31 de fixation, ainsi qu'une pluralité de supports 32, formés sur la surface interne de l'enjoliveur 3, chaque support 32 étant situé entre deux pattes 31 de fixation.

Les pattes 31 de fixation de l'enjoliveur 3 sont disposées suivant un cercle et sont sensiblement perpendiculaires à la surface interne. Chaque patte 31 de fixation est par exemple formée d'une portion de cylindre, comprenant une surface intérieure, orientée vers l'intérieur du cercle et une surface extérieure, orientée vers l'extérieur du cercle. Chaque patte 31 de fixation comprend, à proximité de son extrémité libre, un épaulement 310, sur lequel prend appui la seconde nervure 42 de la bague 4. Chaque patte 31 de fixation comprend également une rainure 311 disposée dans un plan perpendiculaire à la patte 31. La rainure 311 est formée sur la surface de la patte opposée à la surface de la patte sur laquelle est formée l'épaulement 310.

Chaque support 32 est de forme sensiblement parallélépipédique et est situé dans un plan radial du cercle formé par les pattes 31 de fixation. La bague 4 est destinée à prendre appui contre les supports 32 de l'enjoliveur, par appui de son bord 44 le plus proche de la seconde nervure 42 sur ces supports 32.

La distance entre la surface interne de l'enjoliveur 3 et l'extrémité libre de chaque support 32 est inférieure à la distance entre la surface interne de l'enjoliveur 3 et l'extrémité libre de chaque patte 31 de fixation.

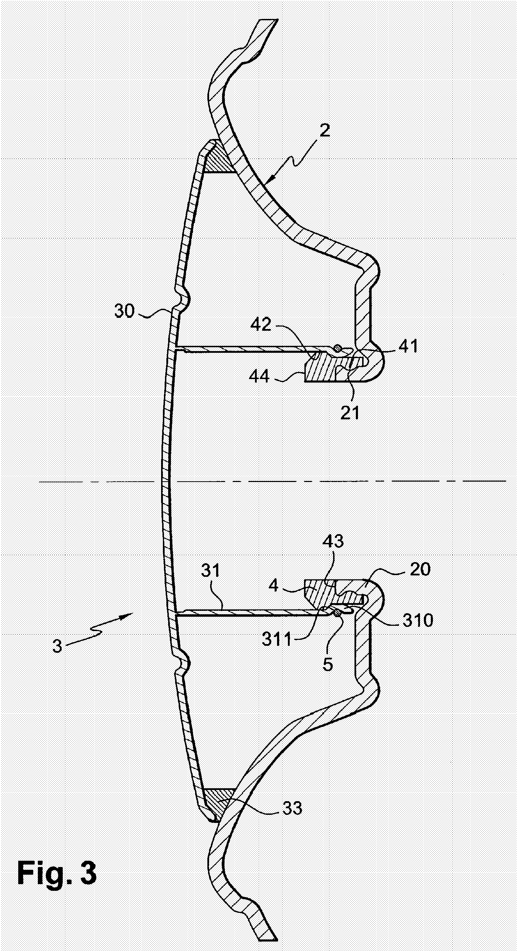

Un joint 33, représenté en particulier sur les figures 3, 4, 6 et 7, est fixé sur le pourtour intérieur de l'enjoliveur et permet d'éviter un endommagement du voile de la roue lorsque l'enjoliveur 3 est monté ou démonté de la roue.

Les rainures 311 des pattes 31 de fixation de l'enjoliveur accueillent un anneau 5 de maintien destiné à maintenir les pattes de fixation en position sur le voile 2 de la roue.

Lorsque les pattes 31 de fixation de l'enjoliveur 3 se fixent sur l'extérieur (respectivement l'intérieur) de la bague 4, l'épaulement 310 des pattes de fixation est formé sur la surface intérieure (respectivement extérieure) des pattes 31 de fixation de l'enjoliveur 3.

L'enjoliveur 3 est monté sur le voile 2 d'une roue de véhicule au moyen de la bague 4 de fixation selon l'invention de la manière suivante : par fixation de la bague 4 sur l'enjoliveur 3 puis fixation de l'ensemble enjoliveur avec bague sur le voile 2.

La bague 4 est fixée sur l'enjoliveur 32 de la façon suivante :
- positionnement de la bague 4 en vis-à-vis des pattes 31 de fixation de l'enjoliveur 3 ; pour ce faire, la seconde nervure 42 est située du côté de l'enjoliveur 3.
- insertion de la bague 4 entre les pattes 31 de fixation ou autour des pattes 31 de fixation, suivant le mode de réalisation de l'invention jusqu'à ce que le bord 44 de la bague 4 le plus proche de la seconde nervure 42 vienne en butée contre les supports 32 et que la seconde nervure 42 de la bague soit encliquetée derrière l'épaulement 310 de chaque patte 31 de fixation de l'enjoliveur 3 ; pour ce faire, la bague est enfoncée vers l'enjoliveur suivant l'axe longitudinal de la bague.

L'ensemble enjoliveur avec bague est fixé sur le voile 2 de la façon suivante :
- positionnement de l'enjoliveur 3 muni de la bague 4 en vis-à-vis de l'ouverture centrale du voile 2 de la roue ;
- insertion de la bague 4 sur la surface extérieure de la bordure 20 de l'ouverture centrale du voile 2 par enfoncement de l'ensemble enjoliveur avec bague, jusqu'à ce que l'épaulement 43 de la bague 4 vienne en butée contre la surface d'extrémité de la bordure 20 de l'ouverture centrale du voile 2 et que la première nervure 41 soit encliquetée dans la rainure 21 réalisée dans la bordure 20 de l'ouverture centrale du voile 2 ; pour ce faire, l'ensemble enjoliveur avec bague est enfoncé vers le voile 2 de roue suivant l'axe longitudinal de la bague 4.

L'anneau 5 de maintien est inséré dans la rainure 311 de chaque patte 31 de fixation de l'enjoliveur 3 après fixation de la bague 4 sur l'enjoliveur 3 et avant la fixation de l'ensemble enjoliveur avec bague sur le voile 2.

Lors du démontage de l'enjoliveur 3, en tirant l'enjoliveur vers l'extérieur de la roue suivant l'axe de symétrie de l'enjoliveur, la bague 4 reste en place sur le voile 4 : elle est en particulier maintenue par l'insertion de la première nervure 41 de la bague 4 dans la rainure 21 réalisée sur la bordure de l'ouverture centrale du voile 2.

L'enjoliveur 3 peut être remonté sur la roue, par exemple après intervention sur la roue, de la manière suivante.

L'enjoliveur 3 est positionné en vis-à-vis de l'ouverture centrale du voile 2 muni de la bague 4 de fixation puis l'enjoliveur 3 est fixé sur la bague 4 fixée dans l'ouverture centrale du voile 2.

L'étape de fixation de l'enjoliveur 3 sur la bague 4 consiste à insérer la bague 4 entre les pattes 31 de fixation ou autour des pattes 31 de fixation de l'enjoliveur jusqu'à ce que le bord 44 de la bague vienne en butée contre les supports 32 et que la seconde nervure 42 de la bague soit encliquetée derrière l'épaulement 310 de chaque patte 31 de fixation de l'enjoliveur 3. L'insertion est réalisée suivant l'axe longitudinal de la bague.

Par ailleurs, la bague 4 est de préférence_en polyamide.

L'anneau 5 est de préférence en acier ou en acier inox.

Bien entendu, la présente invention n'est pas limitée aux modes de réalisation décrits à titre d'exemple ; ainsi, la bague (4) est de section par exemple ovale et non circulaire, les pattes (31) de fixation de l'enjoliveur (3) étant alors également disposées suivant un ovale et la section de la bordure (20) de l'ouverture centrale du voile (2) étant également ovale.

## Revendications

1. Bague (4) de fixation d'un enjoliveur (3) sur un voile (2) de roue présentant une ouverture centrale délimitée par une bordure (20), comprenant :
- une première nervure (41) circulaire permettant la fixation de la bague (4) sur le voile (2),
- une seconde nervure (42) circulaire permettant la fixation de la bague (4) sur l'enjoliveur (3).

2. Bague (4) de fixation selon la revendication 1, **caractérisée en ce que** les première et seconde nervures (41, 42) sont situées sur la surface intérieure de la bague (4).

3. Bague (4) de fixation selon la revendication 1, **caractérisée en ce que** les première et seconde nervures (41, 42) sont situées sur la surface extérieure de la bague (4).

4. Bague (4) de fixation selon la revendication 1, **caractérisée en ce que** la première nervure (41) et la seconde nervure (42) sont respectivement situées sur deux surfaces opposées de la bague (4).

5. Bague (4) de fixation selon l'une des revendications 1 à 4, **caractérisée en ce que** la première nervure (41) est adaptée pour coopérer avec une rainure (21) située sur la bordure (20) de l'ouverture centrale du voile (2).

6. Bague (4) de fixation selon l'une des revendications 1 à 5, **caractérisée en ce qu'**elle comprend un épaulement (43) circulaire destiné à prendre appui sur l'extrémité de la bordure (20) de l'ouverture centrale du voile (2).

7. Bague (4) de fixation selon l'une des revendications 1 à 6, **caractérisée en ce que** la seconde nervure (42) est adaptée pour coopérer avec une pluralité de pattes (31) de fixation de l'enjoliveur (3).

8. Bague (4) de fixation selon l'une des revendications 1 à 7, **caractérisée en ce qu'**elle comprend une pluralité de rainures (45) longitudinales de longueur inférieure à la longueur de la bague (4).

9. Procédé de montage d'un enjoliveur (3), comprenant une pluralité de pattes (31) de fixation et d'une pluralité de supports (32) intercalés entre les pattes (31) de fixation, sur un voile (2) d'une roue de véhicule au moyen d'une bague (4) de fixation selon l'une quelconque des revendications 1 à 8, le procédé comprenant les étapes suivantes :
- fixation de la bague (4) sur l'enjoliveur (3) ;
- fixation de l'ensemble enjoliveur (3) avec bague (4) sur le voile (2).

10. Procédé de montage selon la revendication 9, **caractérisé en ce que** l'étape de fixation de la bague (4) sur l'enjoliveur (3) comprend les étapes suivantes :
- positionnement de la bague (4) en vis-à-vis des pattes (31) de fixation de l'enjoliveur (3) ;
- insertion de la bague (4) entre les pattes (31) de fixation ou autour des pattes (31) de fixation jusqu'à ce qu'un bord (44) de la bague vienne en butée contre les supports (32) et que la seconde nervure (42) de la bague soit encliquetée derrière un épaulement (310) de chaque patte (31) de fixation de l'enjoliveur (3).

11. Procédé de montage selon la revendication 9 ou 10, **caractérisé en ce que** l'étape de fixation de l'ensemble enjoliveur (3) avec bague (4) sur le voile (2) comprend les étapes suivantes :
- positionnement de l'enjoliveur (3) muni de la bague (4) en vis-à-vis de l'ouverture centrale du voile (2) de la roue ;
- insertion de la bague (4) dans ou autour de la bordure (20) de l'ouverture centrale du voile (2) par enfoncement de l'ensemble enjoliveur avec bague jusqu'à ce qu'un épaulement (43) de la bague (4) vienne en butée contre la surface d'extrémité de la bordure (20) de l'ouverture centrale du voile (2) et que la première nervure (41) soit encliquetée dans une rainure (21) de la bordure (20) de l'ouverture centrale du voile (2).

12. Procédé de montage selon l'une des revendications 9 à 11, **caractérisé en ce que** l'étape de fixation de la bague (4) sur l'enjoliveur (3) est suivie, avant l'étape de fixation de l'ensemble enjoliveur (3) avec bague (4) sur le voile (2), d'une étape de fixation d'un anneau (5) de maintien à l'intérieur d'une rainure (311) située sur chaque patte (31) de fixation de l'enjoliveur (3).

13. Procédé de remontage d'un enjoliveur (3), comprenant une pluralité de pattes (31) de fixation et d'une pluralité de supports (32) intercalés entre les pattes (31) de fixation, sur un voile (2) d'une roue de véhicule au moyen d'une bague (4) de fixation selon l'une quelconque des revendications 1 à 8, le procédé comprenant les étapes suivantes :
- positionnement de l'enjoliveur (3) en vis-à-vis de l'ouverture centrale du voile (2) de la roue muni de la bague (4) ;
- fixation de l'enjoliveur (3) sur la bague (4) fixée dans l'ouverture centrale du voile (2).

14. Procédé de remontage selon la revendication 13, **caractérisé en ce que** l'étape de fixation de l'enjoliveur (3) sur la bague (4) consiste à insérer la bague (4) entre les pattes (31) de fixation ou autour des pattes (31) de fixation de l'enjoliveur jusqu'à ce qu'un bord (44) de la bague vienne en butée contre les supports (32) et que la seconde nervure (42) de la bague soit encliquetée derrière un épaulement (310) de chaque patte (31) de fixation de l'enjoliveur (3).

15. Roue de véhicule comprenant :
- une jante (1),
- un voile (2) fixé à l'intérieur de la jante (1),
- un enjoliveur (3) fixé sur le voile (2) par l'intermédiaire d'une bague de fixation selon l'une quelconque des revendications 1 à 8 par un procédé de montage selon l'une quelconque des revendications 9 à 12 ou de remontage selon la revendication 13 ou 14, l'enjoliveur (3) comprenant une pluralité de pattes (31) de fixation fixées sur une surface interne de l'enjoliveur (3).

16. Roue de véhicule selon la revendication 15, **caractérisée en ce que** les pattes (31) de fixation comprennent chacune un épaulement destiné à coopérer avec une nervure (42) de la bague.

17. Roue de véhicule selon la revendication 15 ou 16, **caractérisée en ce que** l'enjoliveur (3) comprend en outre une pluralité de supports (32) fixés sur la surface interne de l'enjoliveur (3), chacun étant situé entre deux pattes (31) de fixation et la bague (4) de fixation étant destinée à prendre appui sur lesdits supports (32).

18. Roue de véhicule selon la revendication 17, **caractérisée en ce que** la distance entre la surface interne de l'enjoliveur (3) et l'extrémité libre de chaque support (32) est inférieure à la distance entre la surface interne de l'enjoliveur (3) et l'extrémité libre de chaque patte (31) de fixation.

19. Roue de véhicule selon l'une des revendications 15 à 18, **caractérisée en ce qu'**elle comprend en outre un anneau (5) de maintien situé à l'intérieur d'une rainure (311) située sur chaque patte (31) de fixation de l'enjoliveur (3).
